# EUROPEAN PATENT SPECIFICATION

(11) **EP 2 987 624 B1**
(45) Date of publication and mention of the grant of the patent: **14.11.2018**
(21) Application number: 14181761.9
(22) Date of filing: 21.08.2014
(51) Int. Cl.: B29C 63/42, B29C 65/68, B29C 65/00

(54) **Heating blanket**
Wärmedecke
Couverture chauffante

(43) Date of publication of application: 24.02.2016
(73) Proprietor: Frans Nooren Afdichtingssystemen B.V., 9503 JB Stadskanaal (NL)
(72) Inventor: Doddema, Jan Frederik, 9461 HV Gielen (NL); Hofstee, Sander Hendrikus Johannes, 8940 Geluwe (BE)
(74) Representative: Nederlandsch Octrooibureau

(56) References cited:
- EP-A1- 1 628 362
- WO-A1-2012/094765
- JP-A- H0 560 286

## Description

### Field of the invention

The present invention relates to a heating blanket, in particular to a heating blanket for providing shrinkable sleeve materials on a pipe assembly. In a further aspect the present invention relates to a method for shrinking a sleeve around a pipe assembly and adhering the sleeve thereto in the same cycle.

### Prior art

International publication WO 2010/102392 discloses an apparatus for heating an elongate tubular article, comprising a frame member adapted to be disposed around the article. A heater is provided with multiple heating zones and a controller for operating the heating device. The apparatus may be used to apply a heat shrinkable sleeve around a welded pipe joint. The heater may be infrared based and may use thin stamped sheets. The diameter of the interior of the frame may change along the length of the frame.

Another prior art apparatus and method are disclosed in JPH0560286.

### Summary of the invention

The present invention seeks to provide an improved heating blanket for providing a heat shrinkable sleeve on a pipe assembly, in particular a field joint of two abutting pipe ends. The heating blanket allows for a gradual and substantially homogenous heating of the sleeve, ensuring even sleeve shrinkage and a durable sealed enclosure of the pipe assembly. The heating blanket is able to shrink and bond many types of shrink sleeves, and shrinkable materials, without preheating the pipe assembly. The heating blanket has a low weight-to-size ratio to facilitate safe manual handling and convenient application to the pipe assembly, in particular for large diameter pipe assemblies.

According to the present invention, a heating blanket of the type defined in the preamble is provided, wherein the heating blanket comprises a heating sheet and an insulation sheet interposed between the heating sheet and a pressure member, wherein the pressure member is arranged for conformal engagement of the heating blanket around the pipe assembly during operation. Conformal engagement means that the heating blanket of the present invention brings the heat shrinkable sleeve and the heating blanket in close contact, thus reducing and ideally leaving no discernible air gap between the heat shrinkable sleeve and the heating blanket.

The heating blanket of the present invention has many advantages with respect to thermal efficiency, ease of use, time needed for operating and heat up time. Due to the heating sheet being interposed between the heat shrinkable sleeve and the insulation sheet, heat generated by the heating sheet is trapped between the pipe assembly and the insulation sheet. As a result, the shrinkable sleeve temperature can be raised in an even and homogenous fashion throughout the sleeve, without excessive heating of only an inner or outer side/surface of the sleeve. Local burning of the heat shrinkable sleeve is thus avoided. Because of the snug and conformal engagement of the heating blanket with the sleeve during operation, heat losses are kept to a minimum. Preheating of the pipe assembly is not needed. The heating blanket of the present invention can be applied to shrinkable sleeves with soft or hard adhesives. According to the invention, the heating sheet is provided with a pattern of resistance wiring connectable to an electric power supply, allowing efficient control of the heating process. In an embodiment the heating sheet may further comprise two silicone based layers with the pattern of resistance wiring disposed there between. The silicone based layers are advantageous for use with certain types of shrinkable sleeves, such as shrinkable sleeves made by Seal for life Industries.

In an embodiment, the pattern of resistance wiring may be arranged for providing a specific heat capacity of at least 2W/cm², e.g. 2.5 or 3 W/c^{m2} for gradual and homogenous heating of a shrinkable sleeve without overheating.

In an embodiment, the pressure member may comprise a sheet material provided with one or more tensioning members, wherein the sheet material may be a pliable sheet material for snug and conformal engagement of the heating blanket with the shrinkable sleeve and pipe assembly.

In an alternative embodiment, the pressure member comprises two or more cylindrical sections of rigid material, wherein the two or more cylindrical section may comprise two releasable clamping shell members configured for firmly clamping the insulation sheet and heating sheet onto the heat shrinkable sleeve. In some embodiments the rigid material is a fiber reinforced material (e.g. glass fiber reinforced epoxy).

To improve the shrinking and bonding process of the heat shrinkable sleeve around the pipe assembly, the pattern of resistance wiring comprises at least two, e.g. three sections (or even six), wherein a control unit may be provided and connected to the pattern of resistance wiring. The control unit may be arranged to control the at least two sections independently.

In an advantageous embodiment the control unit is arranged to control heating temperatures in a temperature range between 80-230° during operation. This embodiment allows a variety of shrinkable sleeves to be used, from soft mastic-based shrink sleeves to hard, hot melt shrink sleeves provided with a stiff and hard backing material (e.g. HDPE) without preheating the pipe assembly.

Operational temperatures of the heating blanket may be monitored by providing the heating blanket with one or more temperature sensors connected to e.g. the control unit. The one or more temperature sensors may be disposed in the heating sheet or on an outer surface thereof facing the shrinkable sleeve and/or the insulation sheet.

In a further aspect the present invention relates to a method for shrinking a sleeve around a pipe assembly and bonding the sleeve thereto. The method comprises providing a heat shrinkable sleeve around two abutting pipe ends of the pipe assembly, the sleeve comprising an adhesion layer and a backing layer; providing a heating blanket around the sleeve in conformal engagement therewith; and operating the heating blanket for shrinking the sleeve around the pipe assembly and adhering the sleeve thereto.

In an embodiment, the backing layer may comprise high density polyethylene, low density polyethylene or polypropylene, or polyurethane, and any of these may be further provided with a (shrinkable) fibre reinforcement. The adhesion layer may comprise a mastic adhesive or hot melt adhesive. In further embodiments the backing layer has a thickness between 0.5 mm and 5 mm. Hence, a variety of heat shrinkable sleeves can be used having markedly different characteristics.

The method of the present invention is suitable for use with pipe assemblies of at least 10 inch to even 56 inch in diameter.

### Short description of drawings

The present invention will be discussed in more detail below, using a number of exemplary embodiments, with reference to the attached drawings, in which
Figure 1 shows a top view of a heating blanket according to the present invention;
Figure 2 shows a cross sectional view of a heating blanket according to the present invention; and
Figure 3 shows a cross sectional view of a heating blanket wrapped around a shrinkable sleeve and a pipe assembly.

### Detailed description of exemplary embodiments

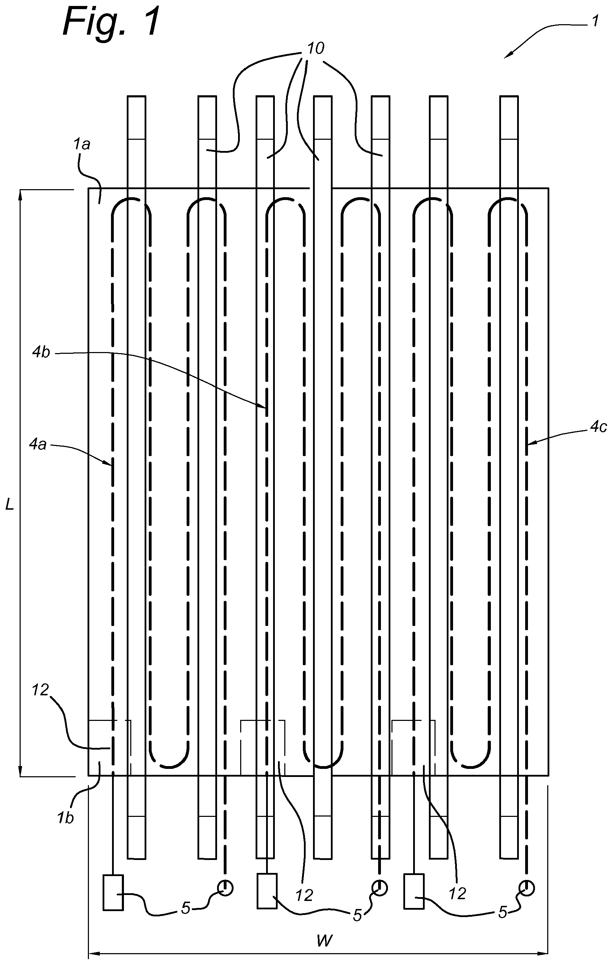

Figures 1 to 2 respectively show a top view and a cross sectional view of a heating blanket 1 for providing a shrinkable sleeve on a pipe assembly according to the present invention. In the depicted embodiment the heating blanket 1 comprises a heating sheet 2 provided with a pattern of resistance wiring 4 connectable to an electric power supply. The heating sheet 2 may in further embodiments be based on different types or combinations of heating techniques, e.g. using a heating medium.

In an embodiment the pattern of resistance wiring 4 may typically comprise one or more U-turns of electrical resistance wires 4 connectable to the electrical power supply via a set of e.g. industrial electrical connectors 5. In other embodiments the pattern of resistance wiring/wires 4 may comprise a zigzag-like pattern for further increasing a surface coverage of the heating sheet 2 that can be heated electrically.

The heating blanket 1 further comprises an insulation sheet 6 interposed between the heating sheet 2 and a pressure member 8, wherein the pressure member 8 is arranged for conformal engagement of the heating blanket 1 around the pipe assembly 3 during operation. In advantageous embodiments the insulation sheet 6 is a viscoelastic insulation sheet 6 for conformal engagement thereof with the pipe assembly and a possibly present coating thereon, wherein the viscoelastic insulation sheet 6 may comprise a foam material, such as NASA foam.

In most embodiments the heating blanket 1 of the present invention is a substantially flat and rectangular pliable sheet having one or more layers, such as the heating sheet 2 and insulation sheet 6. The one or more layers may be affixed together (e.g. stitched or glued) yielding a composite heating blanket 1 that can be handled as a single piece component to be wrapped around a pipe assembly. Alternatively, it is conceivable that the one or more layers are not affixed together, so that each layer can be separately handled and wrapped around the pipe assembly if necessary.

In the embodiment shown in Figure 1, the heating blanket 1 may comprise two opposing ends 1a, 1b that overlap once the heating blanket 1 is looped or wrapped around a pipe assembly for heating thereof. The length *L* and width *W* of the heating blanket 1 may be adapted for virtually all pipe diameters, even for large pipe diameters such as 48 inch pipes or even larger.

According to the invention, when applying the heating blanket 1 to a pipe assembly provided with a heat shrinkable sleeve, the pressure member 8 can be tightly fitted around the insulation sheet 6 and heating sheet 2, which are tightly wrapped or looped around the heat shrinkable sleeve. The pressure member 8 may then be configured for providing a distributed pressure or compression force on the insulation sheet 6 and heating sheet 2, so that he heating blanket 1 is able to absorb circumferential and longitudinal surface irregularities of the shrinkable sleeve and pipe assembly for optimal contact therewith.

The pressure member 8 is particularly advantageous for e.g. field joints having a cutback of mainline pipe coating, thus wherein abutting and welded pipe ends are not covered by the mainline coating. The heating blanket 1 of the present invention is able to absorb various circumferential and longitudinal surface irregularities of such a cutback and can be snugly wrapped around the pipe assembly with a minimum of internal cavities disposed between the heating blanket 1 and the pipe assembly, e.g. between the heat shrinkable sleeve and heating sheet 2.

Another advantage of the heating blanket 1 is that conformal engagement of the heating blanket 1 with a shrinkable sleeve disposed around a pipe assembly greatly reduces external disturbances of the heating process due to e.g. weather conditions. For example, in prior art systems there is often a considerable air gap interposed between the heat shrinkable sleeve and a heating apparatus used for shrinking the sleeve around a e.g. a field joint. With such systems , however, cold and windy weather conditions may disturb the heating process as cold wind may transport too much heat from the shrinkable sleeve and negatively influence the shrinking and bonding process to the pipe assembly.

The heating blanket 1 of the present invention on the other hand minimizes and, in an advantageous embodiment, leaves no discernible and accessible air gap between the heating blanket 1 and the shrinkable sleeve as well as the pipe assembly. In use, the heating blanket 1 ensures optimal temperature conditions for the shrinking and bonding process of the heat shrinkable sleeve in many weather conditions. Moreover, the conformal engagement of the heating blanket 1 with the shrinkable sleeve and pipe assembly allows the heating blanket 1 to be used in e.g. explosive atmospheres, as explosive gases cannot penetrate the heating blanket 1 and the insulation sheet 6 is configured for keeping an outer surface of the heating blanket 1 at relative low temperatures, i.e. at least sufficiently low to avoid possible combustion.

Another advantage of the present invention is that the insulation sheet 6 enables a gradual and homogenous heating of a heat shrinkable sleeve disposed around a pipe assembly. In many embodiments the insulation sheet 6 is a viscoelastic insulation sheet 6 configured for thermal insulation, e.g. a thermal viscoelastic insulation sheet 6. The viscoelastic insulation sheet 6 may comprise a foam material, such as NASA foam, for conformal engagement of the insulation sheet 6 with underlying contours of the heating sheet 2, the heat shrinkable sleeve and/or the pipe assembly and cutback region thereof. As the heating sheet 2 with the pattern of resistance wiring 4 is disposed between the heat shrinkable sleeve and the viscoelastic insulation sheet 6, thermal insulation properties of the insulation sheet 6 enables gradual heating of the sleeve as generated heat is trapped between the pipe assembly and the heating blanket 1. The gradual and homogenous heating of the heat shrinkable sleeve also enables an evenly distributed and homogenous sleeve shrinkage, thereby providing an even and homogenous protective sleeve layer around a field joint once the shrinking and bonding process is completed.

Due to the insulation sheet 6, generated heat by the heating sheet 2 is effectively trapped between the pipe assembly and the heating blanket 1, so that the heat shrinkable sleeve is heated from both sides homogenously, i.e. simultaneous heating from an outer surface and an inner surface of the sleeve with a minimal temperature gradient there between.

In tests it was seen that the insulation sheet 6 of the present invention may reduce the time to heat up the heating blanket 1 to operational temperatures from e.g. 8 minutes to 2 minutes.

The homogenous heating process obtained with the heating blanket 1 allows various types of heat shrinkable sleeves to be used, such as soft mastic-based adhesive sleeves to "hot melt" sleeves utilizing hard adhesives. Hot melt sleeves used with prior art systems are known for requiring a preheated pipe assembly before an optimal shrinking and bonding process of the sleeve is possible. The heating blanket 1 of the present invention on the other hand is able to provide such hot melt sleeves on a pipe assembly without preheating the pipe assembly. The insulation sheet 6 allows for a gradual and homogenous build-up of heat throughout the sleeve without excessively overheating and possibly burning an inner and/or outer surface of the sleeve during shrinkage thereof. Hot melt sleeves with e.g. a hard HDPE backing layer can therefore be provided on the pipe assembly without overheating the backing layer, yet allowing the adhesive to flow and seal various surface irregularity of the pipe assembly during the bonding process of the sleeve.

In typical embodiments the insulation sheet 6 comprises an insulation material capable of withstanding temperatures up to 250° degrees Celsius, so that a large variety of heat shrinkable sleeves, including hot melt sleeves, can be heated over a wide temperature range.

In an embodiment the pressure member 8 may be a releasable pressure member 8 that is easily positioned around the insulation sheet 6 and removed once the heat shrinkable sleeve has been properly applied. In many embodiments the pressure member 8 comprises a sheet material, e.g. a pliable sheet material, provided with one or more tensioning members 10. In exemplary embodiments the tensioning members 10 may comprise a strap, such as webbing, provided with tensioning laces for connecting two opposing ends 1a, 1b of the heating blanket 1. In others embodiments the tensioning members 10 may comprise webbing with lashing straps for connecting two opposing end 1a, 1b of the heating blanket 1. The tensioning members 10 of the heating blanket 1 enable the pressure member 8 to be firmly tied around the pipe assembly for even compression of the insulation sheet 6 and the heating sheet 2 onto the heat shrinkable sleeve.

In an alternative embodiment, the pressure member 8 may comprise one or more cylindrical sections of rigid material, such as two releasable clamping shell members configured for clamping the insulation sheet 6 and heating sheet 2 onto the heat shrinkable sleeve. The one or more cylindrical sections or clamping shell members may be provided with one or more tensioning members 10 as described above. In an alternative embodiment the one or more tensioning members 10 may comprise one or more connecting strips for connecting facing end portions of the two releasable clamping shell members. In this embodiment a connecting strip may connect facing end portions of the two clamping shell members along a width thereof. Also, at least one connecting strip may be a pliable connecting strip, allowing two facing end portions of the clamping shell members to remain pivotally connected at all times, thereby facilitating clamping the two clamping shell members around the pipe assembly when installing the heating blanket 1. In an embodiment, the connecting strip may comprise a hinge or a continuous hinge for connecting two facing end portions of the two clamping shell members.

To maximize the weight to strength ratio, the rigid material may be a fiber reinforced epoxy material, which may comprise glass fiber (GFK), carbon fiber (CFK), or even para-aramid synthetic fibers (e.g. "Kevlar") and the like. In a specific embodiment, the pressure member 8 may comprise two or more cylindrical sections of rigid material comprising glass reinforced epoxy, thereby providing e.g. thin, lightweight and strong clamping shell members.

As depicted in the embodiment of Figure 1, the pattern of resistance wiring 4 may comprise a plurality of sections (e.g. three) 4a, 4b, 4c, such as two side sections 4a, 4c and a mid section 4b. The sections 4a, 4b, 4c etc. of the pattern of resistance wiring 4 may be separately operable for segmented heating of the heat shrinkable sleeve, e.g. heating side section 4a, 4c first and then the mid section 4b or vice versa. Segmented heating can also be operated from right to left or vice versa. Depending on the heat shrinkable sleeve used for the pipe assembly in question, an appropriate segmented heating schedule may be chosen using the three heating sections 4a, 4b, 4c. Of course, in general the pattern of resistance wiring 4 may comprise any combination of two or more resistance wiring sections, e.g. six, to meet heating requirements of a particular sleeve for the shrinking and bonding process.

In an embodiment the pattern of resistance wiring 4 is arranged for providing a specific heat capacity of at least 2W/cm², e.g. 2.5 or 3 W/cm². This heat capacity is sufficient for allowing gradual and homogenous heating to take place without overheating, or possibly burning, an inner or outer surface of the shrinkable sleeve. In combination with the insulation sheet 6, the specific heat capacity is sufficient for hot melt sleeves without preheating the pipe assembly. In practice the pattern of resistance wiring 4 typically produces a temperature of about 80 degrees Celsius to 230 °C during operation.

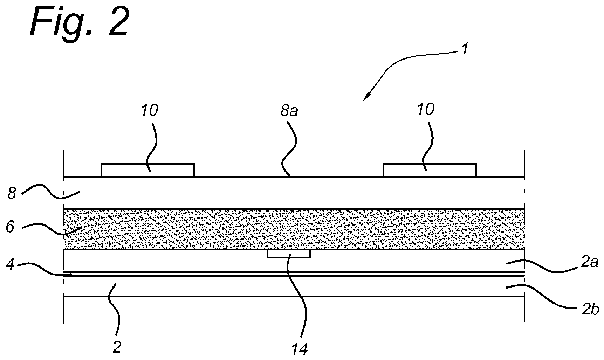

Figure 2 shows a cross sectional view of the heating blanket 1 according to the present invention. In the embodiment shown, the one or more tensioning members 10 are embodied as lashing straps disposed on an outer surface 8a of the pressure member 8 and the insulation sheet 6 is interposed between the pressure member 8 and the heating sheet 2, which may further comprise two, e.g. silicone based, layers 2a,2b with the pattern of resistance wiring 4 disposed there between. The silicone based layers 2a, 2b are advantageous, as they protect the pattern of resistance wiring 4 sufficiently. Also, this allows to use the heating blanket 1 for particular types of backing material used for the heat shrinkable sleeve, for example, wherein the silicone is able to work with shrinkable sleeves sold by Seal for life Industries.

According to the invention, the heating blanket 1 may further comprise a control unit 12 connected to the pattern of resistance wiring 4. Furthermore, in an embodiment the control unit 12 may be configured for controlling the temperature of the pattern of resistance wiring 4 when the heating blanket 1 is operational. In case the heating blanket 1 comprises two or more sections of resistance wiring 4a, 4b, 4c, the control unit 12 may be arranged to control the two or more sections independently, such as the three sections 4a, 4b, 4c. For example, the control unit 12 may be arranged to heat the outer sections 4a, 4c first and then heat up a mid section 4c or vice versa.

In a typical embodiment, the control unit 12 is arranged to control an operational temperature in a temperature range between 80 to 230 °C during operation. This temperature range allows for many types of heat shrinkable sleeves to be applied to a pipe assembly, from soft mastic-based shrink sleeves to hard hot melt shrinkable sleeves with a stiff and hard backing material (e.g. HDPE) without preheating the pipe assembly.

In the embodiment of Figure 2, the heating blanket 1 may further comprise a temperature sensor 14 connected to the control unit 12. The temperature sensor 14 allows for accurate and timely measurement of the operational temperature when the heating blanket 1 is in use, wherein the control unit 12 may control the operational temperature based on measured temperatures by the temperature sensor 14. In an embodiment the temperature sensor 14 is disposed in the heating sheet 14 or on an outer surface thereof.

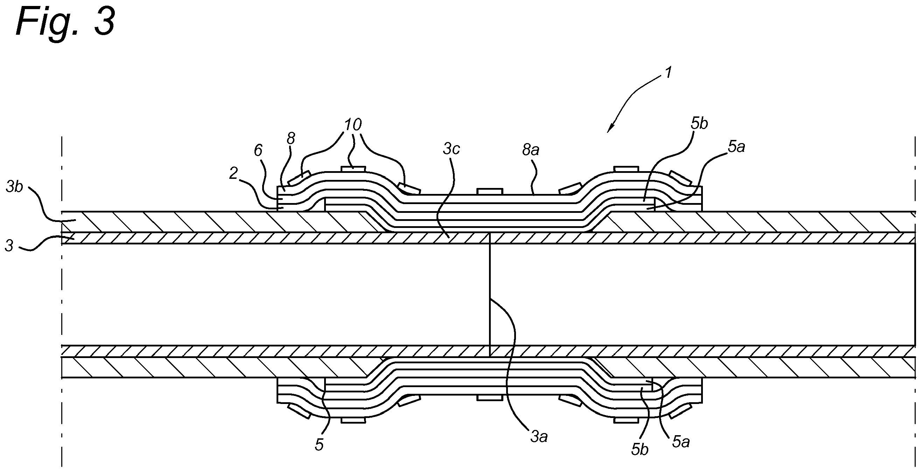

Figure 3 shows a cross sectional view of a heating blanket 1 applied to a pipe assembly according to the present invention. In the embodiment shown, the pipe assembly 3 is provided with a main line coating 3b and further comprises an abutting welded connection 3a of two pipe ends in a cutback region 3c thereof Note that the main line coating 3b is not present in the cutback region 3c.

The pipe assembly 3 is further provided with a heat shrinkable sleeve 5 wrapped around the pipe assembly 3, in particular the mainline coating 3b and cutback region 3c. The shrinkable sleeve 5 overlaps the mainline coating 3b over a predetermined distance in a longitudinal direction thereof to ensure complete sealing and protection of the cutback region 3c.

The heat shrinkable sleeve 5 comprises an adhesion layer 5a and a backing layer 5b, wherein the adhesion layer 5a is configured to melt at an operational temperature for filling surface irregularities of the pipe assembly 3, in particular the cutback region 3c, thereby protecting the field joint 3a against corrosion, fluids and particle ingress etc. The backing layer 5b is typically configured as a protective layer for the adhesion layer 5a and the field joint in general.

In the embodiment shown, the heating blanket 1 is wrapped or looped around the sleeve 5 in conformal engagement therewith, wherein the heating blanket 1 overlaps the shrinkable sleeve 5 and the mainline coating 3b in a longitudinal direction. The heating blanket 1 thus completely covers the shrinkable sleeve 5 for minimizing external disturbances while the heating blanket 1 is in operation. Since the shrinkable sleeve 5 is completely covered and enclosed by the heating blanket 1, heat losses are kept to a minimum so that a gradual and homogenous heating and shrinkage of the sleeve 5 is possible. The insulation sheet 6 then acts as a thermal barrier for trapping heat when the heating blanket 1 is in use.

Conformal engagement of the heating blanket 1 with the pipe assembly 3 is accomplished by the pressure member 8, which in the depicted embodiment comprises a pliable sheet material 8 provided with one or more tensioning members 10 disposed on an outer surface 8a thereof. The one or more tensioning members 10 may be envisaged as lashing straps evenly distributed in the longitudinal direction of the pipe assembly 3 (i.e. along the width *W* of the heating blanket 1). The lashing straps 10 provide an even pressure or compression force to the pressure member 8 for tying the heating blanket 1 firmly to the pipe assembly 3.

From the embodiment in Figure 3 it can be seen that the heating blanket 1 of the present invention leaves no discernible air gap between the heat shrinkable sleeve 5 and the heating blanket 1, e.g. the heating sheet 2, so that cold and windy weather conditions have a minimal influence on the operational temperature while shrinking and bonding the sleeve to the pipe assembly 3. Furthermore, the risk that air can be trapped between the sleeve 5 and the pipe assembly 3 is reduced, ensuring lasting protection of the pipe assembly 3.

In a further aspect the present invention relates to a method for shrinking a heat shrinkable sleeve 5 around a pipe assembly 3. Reference is made to all Figure 1 to 3 for clarity.

The method of the present invention comprises providing a heat shrinkable sleeve 5 around two abutting pipe ends of the pipe assembly 3. In most embodiments the pipe assembly 3 comprises a field joint 3a with cutback region 3c to be provided with corrosion and erosion protection, wherein the protective sleeve 5 comprises an adhesion layer 5a and a backing layer 5b.

The method further comprises providing a heating blanket 1 around the sleeve 5 in conformal engagement therewith and operating the heating blanket 1 for shrinking the sleeve 5 around the pipe assembly 3 and adhering the sleeve (5) thereto.

The conformal engagement of the heating blanket 1 with the heat shrinkable sleeve 5 provides high thermal efficiency during operation of the blanket 1, so that sleeve shrinkage and the bonding process of the sleeve 5 to the pipe assembly 3 is optimized. The heating blanket 1 acts as a thermal barrier that follows the circumferential and longitudinal profile of the shrink sleeve 5 and pipe assembly 3, thereby effectively trapping heat between the pipe assembly 3 and the heating blanket 1. Consequently, an even and homogenous heating and shrinkage of the sleeve 5 is obtained facilitating optimal operational melting temperatures for bonding the adhesion layer 5a to the pipe assembly 3.

In an embodiment the backing layer 5b may comprise a high density polyethylene (HDPE), low density polyethylene (LDPE), or polypropylene (PP). In a further embodiment the adhesion layer 5a may comprise a soft mastic adhesive or a hard holt melt adhesive. Hence a wide range of heat shrinkable sleeves 5 can be used with the method of the present invention.

In many embodiments, the backing layer 5b of the shrinkable sleeve 5 may have a thickness between 0.5 mm and 5 mm, so that the heating blanket is capable of heating many types of heat shrinkable sleeves to an operational temperature for the shrinking and bonding process.

According to the invention, the method may also be applied to a pipe assembly 3 having pipe diameters in the range of at least 10 inch, e.g. even up to 56 inch. This is particular advantageous from a practical point of view. Indeed. the heating blanket 1 has a relatively small size and low weight compared to prior art systems, so that it is easily wrapped or looped around large diameter pipes in conformal engagement therewith without the need for bulky and heavy equipment.

The method of the present invention is suitable to be carried out by the heating blanket 1 disclosed above.

The present invention embodiments have been described above with reference to a number of exemplary embodiments as shown in the drawings. Modifications and alternative implementations of some parts or elements are possible.

## Claims

1. Heating blanket for providing a shrinkable sleeve on a pipe assembly, comprising
a heating sheet (2);
an insulation sheet (6) interposed between the heating sheet (2) and
a pressure member (8), the pressure member (8) being arranged for conformal engagement of the heating blanket (1) around the pipe assembly (3) during operation,
wherein the heating sheet (2) is provided with a pattern of resistance wiring (4) connectable to an electric power supply, and **characterised in that** the pattern of resistance wiring (4) comprises two or more, e.g. three sections (4a, 4b, 4c).

2. Heating blanket according to claim 1, wherein the heating sheet (2) further comprises two silicone based layers (2a,2b) with the pattern of resistance wiring (4) disposed there between.

3. Heating blanket according to claim 1 or 2, wherein the pattern of resistance wiring (4) is arranged for providing a specific heat capacity of at least 2W/cm², e.g. 2.5 or 3 W/cm².

4. Heating blanket according to any one of claims 1-3, wherein the pressure member (8) comprises a sheet material provided with one or more tensioning members (10).

5. Heating blanket according to any one of claims 1-4, wherein the pressure member (8) comprises one or more cylindrical sections of rigid material.

6. Heating blanket according to any one of claims 1-5, further comprising a control unit (12) connected to the pattern of resistance wiring (4).

7. Heating blanket according to claim 6, wherein the control unit (12) is arranged to control temperature in a temperature range between 80-230° during operation.

8. Heating blanket according to claim 6 or 7, further comprising a temperature sensor (14) connected to the control unit (12).

9. Method for shrinking a sleeve around a pipe assembly, comprising
providing a heat shrinkable sleeve (5) around two abutting pipe ends of the pipe assembly (3), the sleeve (5) comprising an adhesion layer (5a) and a backing layer (5b);
providing a heating blanket (1) according to anyone of claims 1-8 around the sleeve in conformal engagement therewith; and
operating the heating blanket (1) for shrinking the sleeve (5) around the pipe assembly (3) and adhering the sleeve (5) thereto.

10. Method according to claim 9, wherein the backing layer (5b) comprises high density polyethylene, low density polyethylene or polypropylene.

11. Method according to claim 9 or 10, wherein the adhesion layer (5a) comprises a mastic adhesive or hot melt adhesive.

12. Method according to any one of claims 9-11, wherein the backing layer (5b) has a thickness between 0.5 mm and 5 mm.

13. Method according to any one of claims 9-12, wherein the pipe assembly (3) has a diameter of at least 10 inch.

## Patentansprüche

1. Wärmedecke zur Bereitstellung einer schrumpfbaren Hülle auf einer Rohranordnung, welche umfasst
eine Wärmedecke (2);
eine Isolierdecke (6), angeordnet zwischen der Wärmedecke (2) und einem Druckelement (8), wobei das Druckelement (8) für gleichförmigen Kontakt der Wärmedecke (1) um die Rohrleitungsanordnung (3) während des Betriebs angeordnet ist,
wobei die Wärmedecke (2) mit einem Muster aus Widerstandsdraht (4), welches einem Netzteil verbindbar ist, bereitgestellt wird, und **dadurch gekennzeichnet, dass** das Muster aus Widerstandsdraht (4) zwei oder mehr, z.B. drei Abschnitte (4a, 4b, 4c), umfasst.

2. Wärmedecke nach Anspruch 1, wobei die Wärmedecke (2) ferner zwei silikonbasierte Schichten (2a, 2b), mit dem Muster aus Widerstandsdraht (4) dazwischen angeordnet, umfasst.

3. Wärmedecke nach Anspruch 1 oder 2, wobei das Muster aus Widerstandsdraht (4) derart angeordnet ist, um eine spezifische Wärmekapazität von mindestens 2 W/cm², z.B. 2.5 W/cm² oder 3 W/cm², bereitzustellen

4. Wärmedecke nach einem der Ansprüche 1-3, wobei das Druckelement (8) ein Folienmaterial umfasst, welches mit einer oder mehr Spannelementen (10) bereitgestellt wird.

5. Wärmedecke nach einem der Ansprüche 1-4, wobei das Druckelement (8) eine oder mehrere zylindrische Abschnitte aus festem Material umfasst.

6. Wärmedecke nach einem der Ansprüche 1-5, welche ferner eine Steuereinheit (12), verbunden mit dem Muster aus Widerstandsdraht (4), umfasst.

7. Wärmedecke nach Anspruch 6, wobei die Steuereinheit (12) zur Steuerung der Temperatur in einem Temperaturbereich zwischen 80-230° während des Betriebs eingerichtet ist.

8. Wärmedecke nach Anspruch 6 oder 7, welche ferner einen Temperatursensor (14), verbunden mit der Steuereinheit (12), umfasst.

9. Verfahren zum Schrumpfen einer Hülle um eine Rohrleitungsanordnung, umfassend Bereitstellen einer Wärme schrumpfbaren Hülle (5) um zwei aneinanderstoßende Rohrleitungsenden der Rohrleitungsanordnung (3), wobei die Hülle eine anhaftende Schicht (5a) und eine Rückschicht (5b) umfasst;
bereitstellen einer Wärmedecke (1) nach einem der Ansprüche 1-8 um die Hülle in gleichförmigen Kontakt damit; und
Betrieb der Wärmedecke (1) und Schrumpfen der Hülle (5) um die Rohrleitungsanordnung (3) und Anhaften der Hülle (5) daran.

10. Verfahren nach Anspruch 9, wobei die Rückschicht (5b) Polyethylen hoher Dichte, Polyethylen niedriger Dichte oder Polypropylen umfasst.

11. Verfahren nach Anspruch 9 oder 10, wobei die anhaftende Schicht (5a) einen Kitt oder einen Heißschmelzkleber umfasst.

12. Verfahren nach einem der Ansprüche 9-11, wobei Rückschicht (5b) eine Dicke zwischen 0,5 mm und 5 mm hat

13. Verfahren nach einem der Ansprüche 9-12, wobei die Rohrleitungsanordnung (3) einen Durchmesser von mindestens 10 Inch hat.

## Revendications

1. Couverture chauffante pour fournir un manchon rétractable sur un ensemble de tuyaux, comprenant
une nappe chauffante (2) ;
une nappe isolante (6) interposée entre la nappe chauffante (2) et
un élément de pression (8), l'élément de pression (8) étant disposé pour un engagement conforme de la couverture chauffante (1) autour de l'ensemble de tuyaux (3) pendant le fonctionnement,
dans lequel la nappe chauffante (2) est pourvue d'un motif de câblage de résistance (4) pouvant être connecté à une alimentation électrique, et **caractérisée en ce que** le motif du câblage de résistance (4) comprend deux ou plusieurs, par exemple trois, sections (4a, 4b, 4c).

2. Couverture chauffante selon la revendication 1, dans laquelle la nappe chauffante (2) comprend en outre deux couches à base de silicone (2a, 2b) entre lesquelles le motif de câblage de résistance (4) est disposé.

3. Couverture chauffante selon la revendication 1 ou 2, dans laquelle le motif de câblage de résistance (4) est disposé pour fournir une capacité de chaleur spécifique d'au moins 2 W/cm², par exemple 2,5 ou 3 W/cm².

4. Couverture chauffante selon l'une quelconque des revendications 1 à 3, dans laquelle l'élément de pression (8) comprend un matériau en nappe pourvu d'un ou plusieurs éléments de tension (10).

5. Couverture chauffante selon l'une quelconque des revendications 1 à 4, dans laquelle l'élément de pression (8) comprend une ou plusieurs sections cylindriques de matériau rigide.

6. Couverture chauffante selon l'une quelconque des revendications 1 à 5, comprenant en outre une unité de commande (12) connectée au motif de câblage de résistance (4) .

7. Couverture chauffante selon la revendication 6, dans laquelle l'unité de commande (12) est disposée de manière à commander la température dans une gamme de températures entre 80 et 230° pendant le fonctionnement.

8. Couverture chauffante selon la revendication 6 ou 7, comprenant en outre un capteur de température (14) connecté à l'unité de commande (12).

9. Procédé de rétraction d'un manchon autour d'un ensemble de tuyaux, comprenant
une fourniture d'un manchon rétractable à la chaleur (5) autour de deux extrémités de tuyau adjacentes de l'ensemble de tuyaux (3), le manchon (5) comprenant une couche d'adhérence (5a) et une couche de support (5b) ;
une fourniture d'une couverture chauffante (1) selon l'une quelconque des revendications 1 à 8 autour du manchon en engagement conforme avec celui-ci ; et
une mise en fonctionnement de la couverture chauffante (1) pour rétracter le manchon (5) autour de l'ensemble de tuyaux (3) et faire adhérer le manchon (5) à celle-ci.

10. Procédé selon la revendication 9, dans lequel la couche de support (5b) comprend du polyéthylène à haute densité, du polyéthylène à basse densité ou du polypropylène.

11. Procédé selon la revendication 9 ou 10, dans lequel la couche d'adhérence (5a) comprend un adhésif de mastic ou un adhésif thermofusible.

12. Procédé selon l'une quelconque des revendications 9 à 11, dans lequel la couche de support (5b) a une épaisseur entre 0,5 mm et 5 mm.

13. Procédé selon l'une quelconque des revendications 9 à 12, dans lequel l'ensemble de tuyaux (3) a un diamètre d'au moins 10 pouces.
